(19) Europäisches Patentamt
European Patent Office
Office européen des brevets

(11) **EP 2 922 297 A1**

(12) **DEMANDE DE BREVET EUROPEEN**

(43) Date de publication:
**23.09.2015 Bulletin 2015/39**

(51) Int Cl.:
*H04N 21/233* (2011.01)    *G06F 17/30* (2006.01)
*H04N 21/2343* (2011.01)    *H04N 21/422* (2011.01)
*H04N 21/439* (2011.01)    *H04N 21/482* (2011.01)

(21) Numéro de dépôt: **15160156.4**

(22) Date de dépôt: **20.03.2015**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA**

(30) Priorité: **21.03.2014 FR 1452358**

(71) Demandeur: **Orange**
**75015 Paris (FR)**

(72) Inventeurs:
• **Damnati, Géraldine**
**22700 PERROS-GUIRREC (FR)**
• **Denjean, Marc**
**75020 PARIS (FR)**

(54) **Procédé et dispositif d accès à une pluralité de contenus, terminal et programme d ordinateur correspondants**

(57)     L'invention concerne un procédé d'accès à une pluralité de contenus à partir d'au moins un mot sélectionné (E1) par un utilisateur, ledit procédé étant caractérisé en ce qu'il comprend les étapes suivantes :
- afficher (E5) une fenêtre graphique identifiant le mot sélectionné,
- fournir (E6), en association avec ladite fenêtre affichée, un ensemble de contenus dans chacun desquels figure de façon représentative ledit mot sélectionné,
- pour un contenu choisi dans ledit ensemble, accéder (E7) directement à au moins une portion du contenu choisi qui contient ledit mot sélectionné.

Fig. 3A

EP 2 922 297 A1

**Description**

**Domaine de l'invention**

Le domaine de l'invention est celui de l'accès à une pluralité de contenus à partir d'au moins un mot sélectionné par un utilisateur. De tels contenus peuvent être du texte, du son ou de l'audio (voix, chant, musique, etc...), des images, des vidéos, des applications/services ou encore toute combinaison de ces différents éléments.

L'invention s'applique ainsi de façon privilégiée mais non limitative à la navigation dans des catalogues de contenus, tel que par exemple un catalogue de podcasts, de vidéos à la demande (VOD, pour "Video On Demand" en anglais), de livres, d'images, etc.... L'invention peut notamment être mise en oeuvre dans un terminal doté d'une interface utilisateur et d'une interface graphique, par exemple une tablette, un téléphone portable, un smartphone (« téléphone intelligent »), un ordinateur personnel, un récepteur de télévision connecté à un réseau de communication, etc...

**Présentation de l'art antérieur**

Aujourd'hui, lorsqu'un utilisateur souhaite accéder à un contenu pour pouvoir le visualiser ou l'écouter, des catalogues de contenus sont mis à sa disposition afin de rechercher, puis de sélectionner un ou plusieurs contenus d'un type donné ou sur un sujet donné.

Du fait notamment du développement d'Internet, de tels catalogues de contenus sont de plus en plus nombreux et fournis et il est donc nécessaire, pour l'utilisateur, lorsque ce dernier souhaite avoir accès à des contenus d'un type donné ou sur un sujet donné, d'avoir recours à des recherches à l'aide d'un ou plusieurs mots-clés qui lui permettent d'obtenir, et ainsi de visualiser ou d'écouter, les contenus visés en nombre relativement restreint.

Les résultats de recherche sont en général présentés de manière assez simple, typiquement sous forme d'une liste de résultats, d'une arborescence de résultats ou encore d'une mosaïque de résultats, où apparaissent des liens hypertextes vers chaque résultat, ainsi qu'éventuellement une image également associée à celui-ci.

Ainsi, les catalogues de contenus sont finalement des magasins numériques qui proposent une mise en rayon de contenus classés de façon thématique, afin de permettre à l'utilisateur de choisir plus facilement et rapidement le contenu dont il a envie.

Le classement proposé est particulièrement intéressant quand un utilisateur a une idée exacte de la catégorie de contenu à laquelle il souhaite accéder.

Cependant, un tel classement présente l'inconvénient de cloisonner les contenus de façon statique, et par ce fait, d'empêcher l'utilisateur de retrouver des contenus oubliés, inconnus ou méconnus.

En outre, suite à l'affichage des résultats de sa recherche, l'utilisateur est généralement obligé d'explorer manuellement les contenus issus de la recherche pour lui permettre de choisir celui ou ceux qui l'intéressent le plus par rapport au(x) mot(s)-clé(s) qu'il a précédemment sélectionné(s) lors de sa recherche. Pour l'utilisateur, une telle opération s'avère fastidieuse et coûteuse en temps. Elle n'est par ailleurs pas adaptée à une recherche de contenus dans des catalogues de taille importante car elle obligerait l'utilisateur à explorer un nombre trop important de contenus pour vérifier qu'ils sont réellement pertinents par rapport au(x) mot(s)-clé(s) qu'il a sélectionné lors de sa recherche.

Il existe donc un besoin d'une solution permettant à l'utilisateur d'accéder facilement et rapidement à des contenus qui soient réellement pertinents par rapport à un ou plusieurs mot(s)-clé(s) sélectionnés lors de sa recherche.

**Objet et résumé de l'invention**

Un des buts de l'invention est de remédier à des inconvénients de l'état de la technique précité.

A cet effet, un objet de la présente invention concerne un procédé d'accès à une pluralité de contenus à partir d'au moins un mot sélectionné par un utilisateur.

Un tel procédé est remarquable en ce qu'il comprend les étapes suivantes :

- afficher une fenêtre graphique identifiant le mot sélectionné,
- fournir, en association avec la fenêtre graphique affichée, un ensemble de contenus dans chacun desquels figure de façon représentative le mot sélectionné,
- pour un contenu choisi dans l'ensemble précité, accéder directement à au moins une portion du contenu choisi qui contient le mot sélectionné.

Une telle disposition permet de proposer à l'utilisateur un ensemble de contenus qui soit plus ciblé que dans l'art antérieur précité. Ainsi, grâce à l'invention, un tel ensemble de contenus présente un degré de pertinence par rapport au mot sélectionné par l'utilisateur au moment de sa recherche qui est beaucoup plus élevé que dans l'art antérieur, puisque le mot sélectionné par l'utilisateur doit y figurer de façon significative.

Selon l'invention, un mot sélectionné figure de façon significative dans un contenu si, pour une collection de contenus thématique (science, littérature, astronomie, sport, etc....) considérée, il remplit les deux conditions suivantes :

- le mot n'est pas uniformément réparti dans toute la collection thématique de contenus,
- la représentativité du mot dans un contenu donné de la collection est élevée, c'est-à-dire par exemple en termes de fréquence d'apparition du mot dans le contenu, en termes de durée au cours de laquelle le mot est prononcé si le contenu est de type audio et/ou visuel, en termes de nombre de pages consécutives dans lesquelles le mot est écrit si le contenu est de type texte, etc....

En outre, une telle disposition a pour avantage de permettre à l'utilisateur d'accéder directement à l'endroit ou aux endroits du contenu qui contiennent le mot sélectionné lors de sa recherche, qu'il s'agisse d'un contenu de type audio et/ou visuel, texte, application/service. Les contenus de type audio comprennent par exemple :

- une ou plusieurs voix parlée(s) accompagnée(s) ou non de musique,
- une ou plusieurs voix chantée(s) accompagnée(s) ou non de musique,
- une ou plusieurs musiques, etc...

Il en résulte un procédé d'accès à des contenus qui est facile, rapide et performant du point de vue de la pertinence des contenus trouvés.

Le procédé d'accès à des contenus selon l'invention est par exemple mis en oeuvre dans un terminal, tel que par exemple une tablette, un téléphone portable, un smartphone (« téléphone intelligent »), un ordinateur personnel, un récepteur de télévision connecté à un réseau de communication, etc....

Selon un mode de réalisation particulier, le procédé d'accès selon l'invention comprend en outre les étapes suivantes :

- afficher, en complément de la fenêtre graphique affichée, au moins une autre fenêtre graphique identifiant un mot prédéterminé qui a été associé préalablement au mot sélectionné identifié dans la fenêtre graphique,
- interagir avec l'autre fenêtre graphique affichée,
- en réponse à l'interaction, fournir un sous-ensemble des contenus de l'ensemble fourni, chaque contenu comprenant à la fois le mot sélectionné et le mot prédéterminé,
- pour un contenu choisi dans le sous-ensemble, accéder directement à au moins une portion du contenu choisi qui contient soit le mot sélectionné, soit le mot prédéterminé, soit les deux mots.

Une telle disposition permet à l'utilisateur d'affiner la liste de contenus obtenue au cours de sa recherche, une telle liste affinée consistant en une liste partielle de cette liste de contenus. Une telle disposition est rendue possible grâce à une mise à disposition spontanée pour l'utilisateur d'un ou plusieurs mots prédéterminés susceptibles de présenter un intérêt pour l'utilisateur et figurant en commun avec le mot sélectionné en début de recherche, et cela de façon significative, dans chacun des contenus de la liste partielle.

De tes mots prédéterminés présentent avantageusement une relation de correspondance avec le mot sélectionné en début de recherche, une telle relation ayant été établie au préalable. Une telle relation de correspondance est par exemple basée sur une proximité sémantique préalablement établie à l'aide d'algorithmes appropriés entre le mot sélectionné au début de la recherche et le ou les mots prédéterminés. Une telle relation de correspondance est également définie par le fait que le mot sélectionné et le mot prédéterminé sont co-occurrents, c'est-à-dire qu'ils apparaissent conjointement dans au moins un contenu donné d'une collection thématique.

Les contenus ne sont ainsi plus proposés en fonction d'une catégorie commune prédéterminée comme c'est le cas dans l'art antérieur, mais en fonction d'un lien sémantique préalablement défini qui permet de créer une liste de contenus dans laquelle des contenus de n'importe quel type (audio et/ou visuel, texte, etc...) peuvent être regroupés, à partir du moment où les contenus regroupés contiennent à la fois le mot sélectionné en début de recherche par l'utilisateur et le mot prédéterminé qui a été associé préalablement à ce mot sélectionné. Une telle disposition favorise la découverte, pour l'utilisateur, de contenus auxquels il n'aurait peut-être jamais songé, ce qui lui permet d'enrichir avantageusement ses connaissances sur un sujet ou un thème donné.

La liste partielle de contenus obtenue permet en outre à l'utilisateur d'accéder toujours directement à l'endroit ou aux endroits du contenu dans lequel apparaît cette fois soit le mot sélectionné lors de la recherche, soit le mot prédéterminé, soit à la fois le mot sélectionné et le mot prédéterminé, qu'il s'agisse d'un contenu de type audio et/ou visuel, texte, application/service.

Selon encore un autre mode de réalisation particulier, la fourniture de l'ensemble de contenus ou du sous-ensemble de contenus est effectuée sous forme visuelle ou sonore.

Une telle disposition permet de mettre à disposition de l'utilisateur, sous forme visuelle ou sonore, la liste ou la liste partielle de contenus, ce qui lui permet d'accéder aux contenus à partir d'un terminal pourvu d'un écran de taille quelconque, aussi bien en situation de sédentarité que de mobilité.

Selon encore un autre mode de réalisation particulier, pour un contenu choisi dans l'ensemble ou dans le sous-ensemble de contenus, le procédé d'accès selon l'invention comprend une indication du nombre d'occurrences, dans le contenu choisi, du mot sélectionné et/ou du mot prédéterminé, ainsi qu'une indication de la position de chaque occurrence dans le contenu choisi.

Une telle disposition permet à l'utilisateur de repérer très facilement dans la liste ou la liste partielle de contenus, le nombre de fois où apparaît dans un contenu donné de l'une de ces listes, le mot sélectionné lors de sa recherche et/ou le mot prédéterminé.

Une telle disposition permet en outre à l'utilisateur un accès rapide, dans les contenus de la liste ou de la liste partielle, à l'information utile constituée par le mot sélectionné lors de la recherche et/ou par le mot prédéterminé.

Selon encore un autre mode de réalisation particulier, les fenêtres graphiques étant rattachées entre elles par un lien, l'étape d'interaction consiste à appuyer sur un repère fixe positionné sur le lien, chaque contenu du sous-ensemble de contenus fourni comprenant, selon un degré de significativité respectif prédéterminé, le mot sélectionné et le mot prédéterminé.

Une telle disposition permet à l'utilisateur de visualiser plus facilement l'endroit précis de l'écran sur lequel il doit interagir pour obtenir la liste partielle de contenus. Par ailleurs, l'endroit où est positionné le repère sur le lien permet à l'utilisateur de distinguer à l'avance, et de façon plus intelligible et plus claire, le degré de significativité du mot sélectionné dans un contenu donné de la sous-liste à obtenir, en proportion du degré de significativité, dans le contenu donné, du mot prédéterminé. Par exemple, dans le cas où le repère est positionné au milieu du lien, l'utilisateur comprend tout de suite avant même d'avoir obtenu la liste partielle, que pour un contenu donné de la liste partielle, le degré de significativité du mot sélectionné est identique au degré de significativité du mot prédéterminé.

Selon encore un autre mode de réalisation particulier, les fenêtres graphiques étant rattachées entre elles par un lien, l'étape d'interaction consiste à se déplacer sur le lien en direction de la fenêtre graphique ou en direction de l'autre fenêtre graphique, l'ordonnancement des contenus du sous-ensemble de contenus fourni étant modifié en fonction de la position de déplacement sur le lien.

Dans ce mode de réalisation, le repère positionné sur le lien est avantageusement mobile, ce qui permet à l'utilisateur de personnaliser l'ordonnancement des contenus de la liste partielle en fonction de ses propres souhaits. Selon un premier exemple, si l'utilisateur souhaite obtenir, à partir de la liste de contenus obtenue après sélection du mot, une liste partielle dans laquelle chaque contenu contient le mot sélectionné et le mot prédéterminé selon le même degré de significativité, l'utilisateur déplace le repère sur le lien de façon à le positionner au milieu du lien. Selon un deuxième exemple, si l'utilisateur souhaite obtenir, à partir de la liste de contenus, une liste partielle dans laquelle le degré de significativité du mot sélectionné par rapport à chaque contenu de la liste partielle est plus élevé que celui du mot prédéterminé, l'utilisateur rapproche le repère à proximité de de la fenêtre graphique identifiant le mot sélectionné. A l'inverse, si l'utilisateur souhaite obtenir, à partir de la liste de contenus, une liste partielle dans laquelle le degré de significativité du mot prédéterminé par rapport à chaque contenu de la liste partielle est plus élevé que celui du mot sélectionné, l'utilisateur rapproche le repère à proximité de l'autre fenêtre graphique identifiant le mot prédéterminé.

Une telle disposition augmente avantageusement l'ergonomie et l'intuitivité de l'interface d'accès mettant en oeuvre le procédé d'accès selon l'invention.

Les différents modes ou caractéristiques de réalisation précités peuvent être ajoutés indépendamment ou en combinaison les uns avec les autres, aux étapes du procédé d'accès défini ci-dessus.

L'invention concerne également un dispositif d'accès à une pluralité de contenus à partir d'au moins un mot sélectionné par un utilisateur, un tel dispositif étant adapté pour mettre en oeuvre le procédé d'accès précité.

Un tel dispositif d'accès est remarquable en ce qu'il comprend :

- un module pour afficher une fenêtre graphique identifiant le mot sélectionné,
- un module pour fournir, en association avec la fenêtre affichée, un ensemble de contenus dans chacun desquels figure de façon représentative le mot sélectionné,
- pour un contenu choisi dans l'ensemble précité, un module pour accéder directement à au moins une portion du contenu choisi qui contient le mot sélectionné.

Selon un mode de réalisation particulier, le dispositif d'accès à une pluralité de contenus comprend en outre :

- un module pour afficher, en complément de la fenêtre graphique affichée, au moins une autre fenêtre graphique identifiant un mot prédéterminé qui a été associé préalablement au mot sélectionné identifié dans la fenêtre graphique,
- un module pour interagir avec l'autre fenêtre graphique,
- un module pour, en réponse à une interaction avec l'autre fenêtre graphique, fournir un sous-ensemble des contenus de l'ensemble fourni, chaque contenu comprenant à la fois le mot sélectionné et le mot prédéterminé,

- pour un contenu choisi dans le sous-ensemble précité, un module pour accéder directement à au moins une portion du contenu choisi qui contient soit le mot sélectionné, soit le mot prédéterminé, soit les deux mots.

Selon encore un autre mode de réalisation particulier, le module de fourniture de l'ensemble de contenus ou du sous-ensemble de contenus est de type visuel ou sonore.

Selon encore un autre mode de réalisation particulier, pour un contenu choisi dans l'ensemble ou dans le sous-ensemble de contenus, le dispositif d'accès comprend un module pour indiquer le nombre d'occurrences, dans le contenu choisi, du mot sélectionné et/ou du mot prédéterminé, ainsi que la position de chaque occurrence dans le contenu choisi.

L'invention concerne également un terminal comprenant le dispositif d'accès à une pluralité de contenus mentionné ci-dessus.

Un tel terminal est par exemple une tablette, un téléphone portable, un smartphone (« téléphone intelligent »), un ordinateur personnel, un récepteur de télévision connecté à un réseau de communication, etc...

L'invention concerne encore un programme d'ordinateur comportant des instructions pour mettre en oeuvre le procédé d'accès à une pluralité de contenus selon l'invention, lorsqu'il est exécuté sur un terminal ou plus généralement sur un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé d'accès à une pluralité de contenus selon l'invention, tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'accès précité.

Le dispositif d'accès, le terminal et le programme d'ordinateur correspondants précités présentent au moins les mêmes avantages que ceux conférés par le procédé d'accès selon la présente invention.

## Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels :

- la figure 1 présente de façon schématique une architecture dans laquelle est mise en oeuvre le procédé d'accès à une pluralité de contenus selon l'invention ;
- la figure 2 présente la structure simplifiée d'un dispositif d'accès à une pluralité de contenus selon un mode de réalisation de l'invention ;
- les figures 3A et 3B présentent de façon schématique les principales étapes d'un procédé d'accès selon l'invention ;
- les figures 4A à 4C présentent différents exemples d'interface permettant d'accéder à une liste ou à une sous-liste de contenus à partir d'un mot-clé sélectionné.

## Description d'un mode de réalisation particulier de l'invention

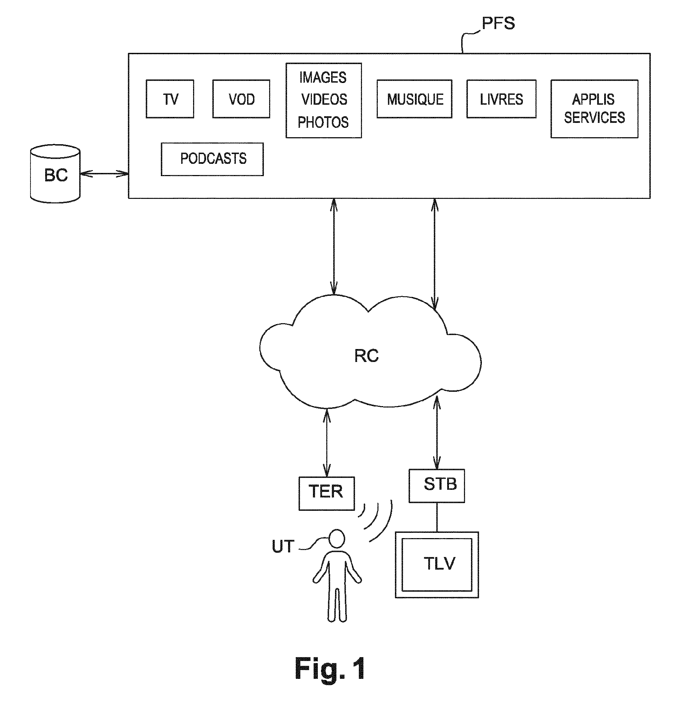

En relation avec la **figure 1,** on présente une architecture dans laquelle est mis en oeuvre le procédé d'accès à une pluralité de contenus selon l'invention.

Une telle architecture comprend un terminal TER d'accès à des contenus proposés par une plateforme de service PFS, via un réseau de communication RC, tel que par exemple de type IP (abréviation anglaise de « Internet Protocol »). La plateforme de service PFS propose différents types de contenus à l'utilisateur UT du terminal TER, tels que par exemple:

- des contenus télévisuels TV, notamment ceux à diffusion programmée dans une grille de programmes,

- des catalogues VOD,
- des catalogues de vidéos et/ou d'images et/ou de photos,
- des catalogues de musique ou de podcasts,
- des catalogues de livres numériques,
- des catalogues d'applications et/ou de services.

L'architecture précitée permet à l'utilisateur UT du terminal TER d'avoir accès aux contenus proposés aussi bien en situation de mobilité qu'en situation de sédentarité.

En situation de mobilité, le terminal TER est par exemple un téléphone portable, un smartphone (« téléphone intelligent »), une tablette, un ordinateur portable, etc...

En situation de sédentarité, le terminal TER pourrait être un ordinateur personnel de type PC.

Toujours en situation de sédentarité, et comme représenté sur la **figure 1,** le terminal TER se compose par exemple :

- d'un terminal d'accès STB qui est apte à recevoir et à traiter les contenus en provenance de la plateforme PFS,
- et d'un terminal d'affichage, par exemple un téléviseur TLV tel que représenté sur la **figure 1,** apte à restituer à l'utilisateur UT les contenus traités par le terminal d'accès STB.

Dans un exemple de réalisation, le terminal d'accès et le terminal d'affichage sont regroupés en un seul terminal. Il pourrait par exemple s'agir d'un téléviseur contenant un décodeur de type set-top-box. Dans un autre exemple, le terminal d'accès STB est une set-top-box et le terminal TER est une tablette faisant office de terminal d'affichage connecté à la set-top-box au moyen d'un réseau local, par exemple sans fil, en particulier du type WiFi ou CPL (abréviation de « courants porteurs en ligne »).

Le terminal d'accès STB, de même que le terminal TER, comprennent en outre des moyens de connexion au réseau de communication RC qui peuvent être, par exemple, de type x-DSL, fibre ou encore 3G et 4G.

Selon l'invention, la plateforme de service PFS dialogue avec une base de connaissance BC qui, pour chaque contenu proposé par ladite plateforme, contient une indexation préalable de chaque contenu par mots-clés, lesquels devant figurer de façon significative dans le contenu. Au sens de l'invention, un mot-clé apparaît de façon significative dans un contenu, si, pour une collection de contenus thématique (science, littérature, astronomie, sport, etc....) considérée, il remplit les deux conditions suivantes :

- le mot n'est pas uniformément réparti dans toute la collection thématique de contenus,
- la représentativité du mot dans un contenu donné de la collection est élevée.

La représentativité du mot s'exprime par exemple par le fait que :

- la fréquence d'apparition du mot dans le contenu est supérieure à un seuil prédéterminé,
- dans le cas d'un contenu de type audio et/ou visuel, la durée au cours de laquelle le mot est prononcé dans le contenu est supérieure à un seuil prédéterminé,
- dans le cas d'un contenu de type texte, le nombre de pages consécutives dans lesquelles le mot est écrit est supérieure à un seuil prédéterminé.

L'indexation préalable de chaque contenu par mots-clés s'appuie essentiellement sur des méthodes statistiques auxquelles s'ajoutent éventuellement des méthodes d'affinage linguistique.

A cet effet, pour un contenu donné, il est procédé, au cours d'une première phase, à une analyse de chaque contenu, individuellement.

Si par exemple le contenu est de type texte, il est procédé en premier lieu à la sélection dans le contenu d'un ou plusieurs mots-clés significatifs de ce contenu comme expliqué précédemment.

Dans le cas où le mot-clé significatif est un seul mot, par exemple « biologie », ou est un groupe de mots, par exemple « biologie humaine », «biologie animale », biologie cellulaire », etc..., il est procédé à un regroupement de ces mots à l'aide, par exemple, d'un outil d'analyse morphosyntaxique.

Si par exemple le contenu est de type audio ou audio-visuel, avant de réaliser les deux opérations qui viennent d'être décrites ci-dessus, il est procédé à une conversion de ce contenu en une transcription textuelle à l'aide d'un algorithme classique de « Speech to Text ».

A la suite des opérations ci-dessus, il est procédé à une analyse inter-contenus. Une telle analyse consiste d'abord à pondérer les mots-clés retenus précédemment en fonction de leur degré de significativité dans le contenu relativement à une collection thématique particulière de contenus (science, littérature, astronomie, sport, etc....) qui peut comprendre aussi bien des contenus de type texte, audio, image, vidéo, application/service ou encore toute combinaison de ces différents éléments. La pondération précitée est par exemple effectuée à l'aide d'un modèle probabiliste bien connu en tant que tel, qui affecte à chaque mot-clé un coefficient de significativité, selon lequel un mot-clé est d'autant plus significatif qu'il est fréquent dans le document et qu'il n'est pas uniformément réparti dans toute la collection thématique de contenus. Un tel modèle probabiliste est par exemple le modèle TF-IDF (de l'anglais « Term Frequency - Inverse Document Frequency ») ou Okapi.

L'ensemble des mots-clés ainsi affectés d'un coefficient de significativité est éventuellement réduit grâce à une étape de filtrage, selon des critères empiriques en fonction de la profondeur d'exploration souhaitée dans une collection thématique de contenus déterminée.

L'analyse se poursuit par une mesure, pour l'ensemble des contenus d'une collection thématique déterminée, d'une association entre un premier mot-clé et un deuxième mot clé. Conformément à l'invention, une telle mesure permet en particulier de déterminer :

- si tel ou tel mots-clés apparaît à la fois dans plusieurs contenus de la collection,
- du degré de significativité individuel de chacun de ces mots-clés via le coefficient TF-IDF ou Okapi qui leur est affecté.

Ainsi, la collection thématique de contenus peut être explorée de façon très large.

A la suite de l'étape de mesure d'association précitée, l'ensemble des contenus d'une collection thématique déterminée est avantageusement indexé :

- par un mot-clé qui est le mot destiné à être sélectionné par l'utilisateur au début de sa recherche,
- par un ou plusieurs mots-clés prédéterminés ayant été associés préalablement au mot-clé précité pour lequel ou lesquels la mesure d'association est la plus importante.

Une fois que l'opération d'indexation est terminée, il est procédé à l'extraction des mots significatifs en association avec les positions respectives dans lesquelles sont situés ces mots dans le contenu.

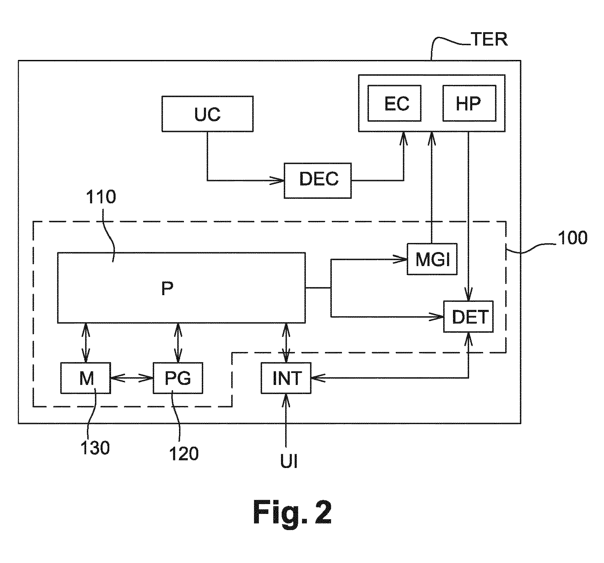

En relation avec la **figure 2,** on considère maintenant la structure simplifiée d'un dispositif 100 d'accès à une pluralité de contenus, selon un exemple de réalisation de l'invention. Un tel dispositif d'accès est adapté pour mettre en oeuvre le procédé d'accès à une pluralité de contenus selon l'invention qui va être décrit ci-dessous.

Dans cet exemple, le dispositif de contrôle d'accès 100 est intégré dans un terminal TER tel que représenté sur la **figure 1,** par exemple un smartphone.

Dans l'exemple représenté à la **figure 2,** le dispositif 100 comprend une unité de traitement 110, équipée par exemple d'un processeur P, et pilotée par un programme d'ordinateur PG 120, stocké dans une mémoire M 130 et mettant en oeuvre le procédé d'accès à une pluralité de contenus selon l'invention. Le terminal TER comprend une unité de communication UC qui contient un module d'émission/réception adapté pour :

- émettre une requête d'accès à une pluralité de contenus mis à disposition dans la plateforme de service PFS de la **figure 1,** à partir de la sélection d'un mot-clé,
- recevoir la pluralité de contenus associée au mot-clé sélectionné.

A l'initialisation, les instructions de code du programme d'ordinateur PG 120 sont par exemple chargées dans une mémoire RAM (non représentée) avant d'être exécutées par le processeur P de l'unité de traitement 110. Le processeur de l'unité de traitement 110 met en oeuvre les étapes du procédé d'accès à une pluralité de contenus qui va être décrit ci-dessous, selon les instructions du programme d'ordinateur 120.

De façon connue en tant que telle, le terminal TER comprend :

- un module INT de traitement des interactions utilisateurs UI,
- un écran de visualisation EC,
- un haut-parleur HP,
- une interface DEC de décodage audio/vidéo des signaux texte, audio, vidéo ou audiovisuels représentatifs des contenus reçus, ladite interface étant adaptée pour transmettre les signaux décodés à l'écran EC ou dans le haut-parleur HP.

Selon l'invention, le dispositif d'accès 100 comprend en outre un module MGI de génération d'interface et un module DET de détection d'interactions utilisateur, lesquels seront décrits plus en détail dans la suite de la description.

Les modules MGI et DET précités sont pilotés par le processeur P de l'unité de traitement 110.

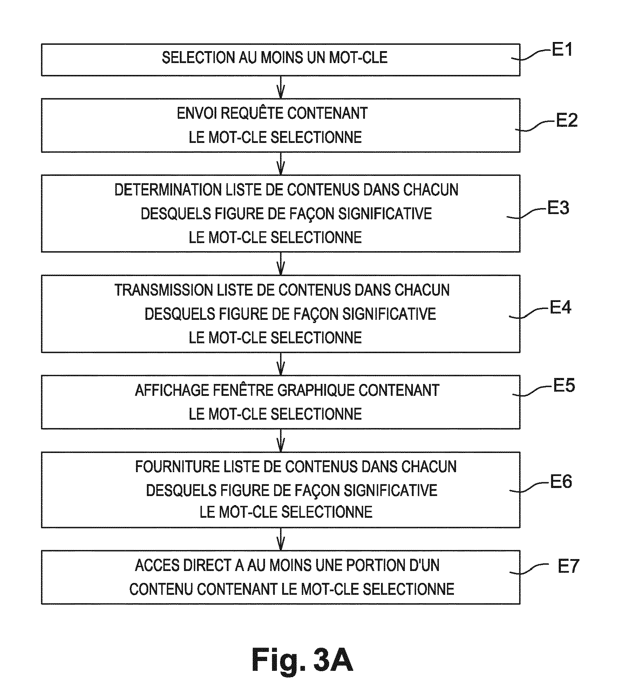

En relation avec la **figure 3A,** on présente maintenant les étapes du procédé d'accès à une pluralité de contenus conformément à un mode de réalisation selon l'invention. Dans le mode de réalisation représenté, ledit procédé d'accès est mis en oeuvre par le terminal TER représenté sur les **figures 1** et **2.**

Au cours d'une étape E1 représentée à la **figure 3A,** il est procédé à la sélection, par l'utilisateur UT, d'au moins un mot-clé qu'il considère pertinent par rapport aux contenus qu'il recherche. Un tel mot-clé peut-être unique ou être constitué d'un ensemble de mots.

Par exemple, dans le cas où l'utilisateur UT souhaite consulter des contenus qui concernent l'astronomie, ce dernier peut se contenter de sélectionner sur le terminal TER le mot « astronomie ».

Selon un autre exemple, dans le cas où l'utilisateur UT souhaite consulter des contenus qui concernent la biologie, il a la possibilité de préciser sa requête en sélectionnant l'ensemble de mots « biologie humaine », « biologie animale », « biologie moléculaire », « biologie cellulaire », etc...en fonction de son centre d'intérêt précis.

Une telle sélection est effectuée manuellement, à l'aide d'un clavier (non représenté) intégré au terminal TER, ou bien oralement à l'aide d'un micro (non représenté) intégré au terminal TER.

Le mot-clé peut être sélectionné par l'utilisateur UT de façon spontanée ou à partir d'une liste de mots-clés préétablie qui est affichée sur l'écran EC du terminal TER représenté sur la **figure 2.**

Au cours d'une étape E2 représentée sur la **figure 3A,** la sélection dudit au moins un mot-clé est interprétée par le module INT de traitement des interactions utilisateur représenté sur la **figure 2,** ce qui déclenche l'envoi, à destination de la plateforme PFS de la **figure 1,** via le module de communication UC du terminal TER, d'une requête en fourniture de contenus qui contient ledit mot-clé sélectionné.

A réception de cette requête, au cours d'une étape E3 représentée sur la **figure 3A,** la plateforme PFS dialogue avec la base de connaissance BC représentée sur la **figure 1,** en vue de déterminer une pluralité de contenus préalablement indexés comme décrit plus haut dans la description, et dans chacun desquels figure de façon significative ledit mot-clé sélectionné. Les contenus ainsi déterminés peuvent être du texte, du son (ou de l'audio), des images, des vidéos, des applications/services ou encore toute combinaison de ces différents éléments.

Au cours d'une étape E4 représentée sur la **figure 3A,** la plateforme PFS renvoie au terminal TER, via le réseau de communication RC, une liste des contenus déterminés par la base de connaissance BC.

Au cours d'une étape E5 représentée à la **figure 3A,** il est procédé à l'affichage du mot-clé sélectionné. A cet effet, une fenêtre graphique identifiant le mot-clé sélectionné est affichée sur l'écran EC du terminal TER à l'aide du module MGI de génération d'interface de la **figure 2.**

Au cours d'une étape E6 représentée à la **figure 3A,** il est procédé à la fourniture, en association avec ladite fenêtre graphique affichée, de la liste des contenus transmise par la plateforme PFS.

Lorsque le terminal TER a un écran de petite taille ou en situation de mobilité, une telle liste peut-être fournie de façon sonore, à l'aide du haut-parleur HP représenté à la **figure 2.** Dans cet exemple, chaque contenu de la liste est présenté oralement à l'utilisateur en mentionnant notamment :

- le type auquel appartient le contenu (ex : photo, film, musique, , livre, etc...),
- le titre du contenu,
- le nombre de fois où apparaît dans le contenu le mot-clé sélectionné : « occurrence 1 », « occurrence 2 », etc....

Pour passer d'un contenu au suivant, l'utilisateur UT prononce par exemple le mot « suivant ». Pour passer à un contenu précédent, l'utilisateur UT prononce par exemple le mot « précédant ».

Lorsque l'écran EC du terminal TER a un écran de taille suffisamment grande ou en situation de sédentarité, une telle liste peut-être fournie de façon visuelle, à l'aide dudit écran EC. Dans cet exemple, les contenus apparaissent dans une liste. Chaque contenu de la liste est identifié notamment par :

- le type auquel appartient le contenu (ex : podcast, film, VOD, etc...),
- le titre du contenu,
- le nombre d'occurrences, dans le contenu, du mot-clé sélectionné, ainsi qu'une indication de la position de chaque occurrence dans le contenu choisi.

L'utilisateur a alors la possibilité d'atteindre tel ou tel contenu de la liste à l'aide d'un curseur ou de façon tactile.

Au cours d'une étape E7 représentée à la **figure 3A,** il est procédé, pour un contenu choisi dans ladite liste, à un accès direct de l'utilisateur UT à au moins une portion du contenu choisi qui contient ledit mot-clé sélectionné.

Dans le cas où la liste de contenus est fournie de façon sonore à l'utilisateur UT, et que les contenus sont de type audio ou audio-visuel, l'utilisateur UT se contente de prononcer simplement « occurrence 1 » ou « occurrence 2 », etc...et la portion du contenu choisi qui contient l'occurrence 1 ou l'occurrence 2, etc... du mot-clé sélectionné est restituée oralement à l'utilisateur.

Dans le cas où la liste de contenus est fournie de façon visuelle à l'utilisateur UT, pour un contenu choisi par l'utilisateur dans la liste, les occurrences du mot-clé sélectionné sont indiquées sur une fenêtre graphique dédiée, par des repères respectifs.

Si le contenu est de type audio ou audiovisuel, la fenêtre graphique dédiée représente par exemple un axe temporel chronologique sur lequel sont matérialisées les occurrences du mot-clé sélectionné en différentes positions sur l'axe.

Selon un autre exemple, si le contenu est de type texte, la fenêtre graphique dédiée représente par exemple uniquement les pages du contenu qui contiennent le mot-clé sélectionné, lequel apparaît dans la page concernée, par exemple en surbrillance.

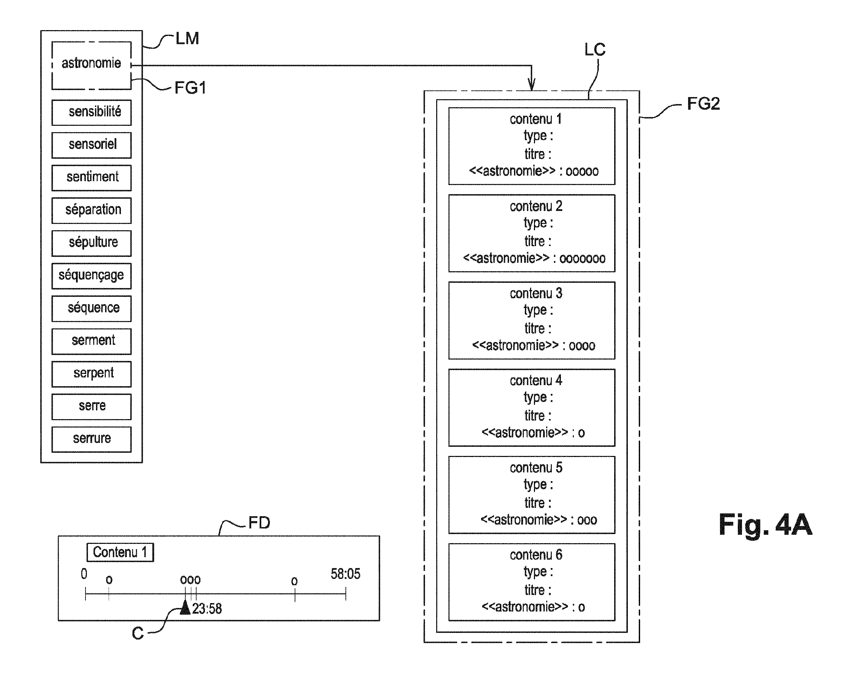

On va maintenant décrire, en relation avec la **figure 4A,** un mode de réalisation d'une interface graphique du terminal TER de la **figure 2** qui permet d'accéder à une pluralité de contenus conformément au procédé décrit en liaison avec la **figure 3A.**

Le mot-clé sélectionné par l'utilisateur UT au cours de l'étape E1 précitée est par exemple le mot « astronomie ». Dans l'exemple représenté sur la **figure 4A,** le mot « astronomie » est sélectionné à partir d'une liste de mots LM proposée à l'utilisateur et apparaît dans une fenêtre graphique FG1 représentée en traits mixtes.

Dans l'exemple représenté sur la **figure 4A,** la liste LC de contenus dans chacun desquels figure le mot « astronomie » est fournie visuellement à l'utilisateur au cours de l'étape E6, dans une fenêtre graphique FG2 représentée en traits mixtes. Les contenus de la liste LC sont ordonnés de telle manière que le premier document de la liste LC est celui dans lequel le mot « astronomie » a le degré de significativité le plus élevée et le dernier document de la liste LC est celui dans lequel le mot « astronomie » a le degré de significativité le moins élevé. D'autres types d'ordonnancement sont possibles. Par exemple, les contenus de la liste LC pourraient être ordonnés par type, en premier les contenus audiovisuels, en second les contenus audio, etc...

Pour chaque contenu de la liste LC, une occurrence du mot « astronomie » est indiquée par le symbole « o ».

Lorsqu'un contenu est sélectionné par l'utilisateur UT dans la liste LC, par exemple le contenu 1 de la liste LC, la rubrique relative au contenu 1 apparaît par exemple en surbrillance ou de façon agrandie par rapport aux rubriques relatives aux autres contenus de la liste LC.

Dans le cas par exemple où le contenu 1 est de type audio, les occurrences du mot « astronomie » sont indiquées sur une fenêtre graphique dédiée FD représentée en traits mixtes sur la **figure 4A,** par les symboles « o » qui se succèdent sur un axe chronologique horizontal affiché dans la fenêtre FD et représentant la durée du contenu 1, soit 58 minutes et 5 secondes dans l'exemple représenté.

L'utilisateur UT a accès directement aux portions du contenu 1 qui contiennent le mot « astronomie » en sélectionnant un des symboles « o », soit à l'aide d'un curseur, soit de façon tactile. Sur la **figure 4A,** un curseur C indique la position courante de restitution de la portion du contenu 1 qui contient la deuxième occurrence du mot « astronomie », soit 23mns et 58 secondes dans l'exemple représenté.

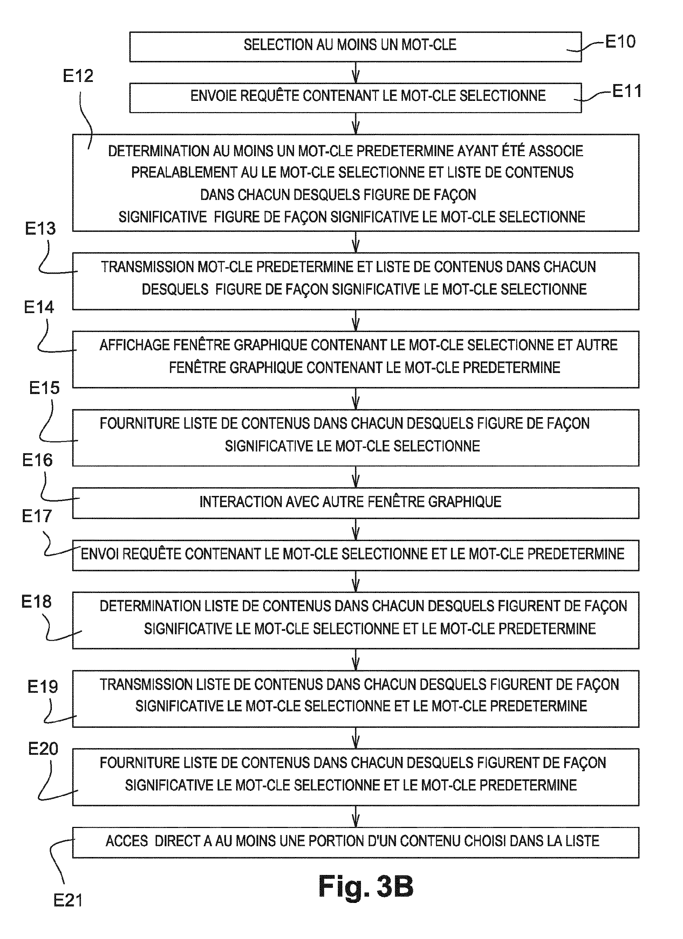

En référence à la **figure 3B,** lors d'une deuxième phase du procédé d'accès qui a été décrit ci-dessus, il est procédé à l'affichage, en complément de la fenêtre graphique identifiant le mot-clé sélectionné, d'au moins une autre fenêtre graphique identifiant un mot prédéterminé qui a été associé préalablement audit mot sélectionné identifié dans ladite fenêtre graphique FG1.

En relation avec la **figure 3B,** on présente maintenant les étapes du procédé d'accès à une pluralité de contenus conformément à un autre mode de réalisation selon l'invention. Dans cet autre mode de réalisation représenté, le procédé d'accès est toujours mis en oeuvre par le terminal TER représenté sur les **figures 1** et **2.**

Au cours d'une étape E10 représentée à la **figure 3B,** il est procédé à la sélection, par l'utilisateur UT, d'au moins un mot-clé qu'il considère pertinent par rapport aux contenus qu'il recherche. Une telle étape est identique à l'étape E1 précitée et ne sera donc pas décrite plus avant.

Au cours d'une étape E11 représentée sur la **figure 3B,** la sélection dudit au moins un mot-clé est interprétée par le module INT de traitement des interactions utilisateur représenté sur la **figure 2,** ce qui déclenche l'envoi, à destination de la plateforme PFS de la **figure 1,** via le module de communication UC du terminal TER, d'une requête en fourniture de contenus qui contient ledit mot-clé sélectionné.

A réception de cette requête, au cours d'une étape E12 représentée sur la **figure 3B,** la plateforme PFS dialogue avec la base de connaissance BC représentée sur la **figure 1,** en vue de déterminer une pluralité de contenus dans chacun desquels figurent de façon significative ledit mot clé sélectionné. Au cours de cette étape, la base de connaissance BC détermine également au moins un mot-clé prédéterminé ayant été associé préalablement par cette dernière audit mot-clé sélectionné, à l'aide de la mesure d'association précitée.

Au cours d'une étape E13 représentée sur la **figure 3B,** la plateforme PFS renvoie au terminal TER, via le réseau de communication RC, une liste des contenus déterminés par la base de connaissance BC, ainsi que ledit au moins un mot prédéterminé.

Au cours d'une étape E14 représentée à la **figure 3B,** il est procédé à l'affichage du mot-clé sélectionné et dudit au moins un mot-clé prédéterminé.

A cet effet :

- une fenêtre graphique identifiant le mot-clé sélectionné est affichée sur l'écran EC du terminal TER,
- une autre fenêtre graphique identifiant ledit au moins un mot-clé prédéterminé est affichée sur l'écran EC du terminal TER, en complément de ladite fenêtre graphique identifiant le mot-clé sélectionné.

Un tel affichage est mis en oeuvre à l'aide du module MGI de génération d'interface de la **figure 2.**

Au cours d'une étape E15 représentée à la **figure 3B,** il est procédé à la fourniture, en association avec ladite fenêtre graphique affichée, de la liste des contenus transmise par la plateforme PFS.

Au cours d'une étape E16 représentée à la **figure 3B,** l'utilisateur UT interagit avec l'autre fenêtre graphique qui identifie ledit au moins un mot-clé prédéterminé. Une telle interaction est détectée au moyen d'un module DET de détection d'interactions qui est contenu dans le dispositif d'accès 100 de la **figure 2.** Il peut s'agir par exemple d'un appui court sur l'autre fenêtre graphique.

Au cours d'une étape E17 représentée à la **figure 3B,** la détection précitée déclenche l'envoi auprès de la plateforme de service PFS de la **figure 1,** via le module de communication UC du terminal TER, d'une requête en fourniture de contenus qui contiennent à la fois ledit mot-clé sélectionné et ledit au moins un mot-clé prédéterminé identifié dans l'autre fenêtre graphique.

A réception de cette requête, au cours d'une étape E18 représentée sur la **figure 3B,** la plateforme PFS dialogue avec la base de connaissance BC représentée sur la **figure 1,** en vue de déterminer une pluralité de contenus préalablement indexés comme décrit plus haut dans la description, et dans chacun desquels figurent de façon significative ledit mot clé sélectionné, ainsi que le mot-clé prédéterminé. Les contenus ainsi déterminés peuvent être du texte, du son (ou de l'audio), des images, des vidéos, des applications/services ou encore toute combinaison de ces différents éléments.

Au cours d'une étape E19 représentée à la **figure 3B,** la plateforme PFS renvoie au terminal TER, via le réseau de communication RC, la liste des contenus déterminée à l'étape E18.

Au cours d'une étape E20 représentée à la **figure 3B,** il est procédé à la fourniture, en association avec les deux fenêtres graphiques affichées, de la liste des contenus transmise par la plateforme PFS. Une telle étape est similaire à l'étape E6 précitée et ne sera donc pas décrite plus avant.

Au cours d'une étape E21 représentée à la **figure 3B,** il est procédé, pour un contenu choisi dans ladite liste, à un accès direct de l'utilisateur UT à au moins une portion du contenu choisi qui contient ledit mot-clé sélectionné et ledit mot prédéterminé. Un tel accès est similaire à celui décrit à l'étape E7 précitée et ne sera donc pas décrit plus avant.

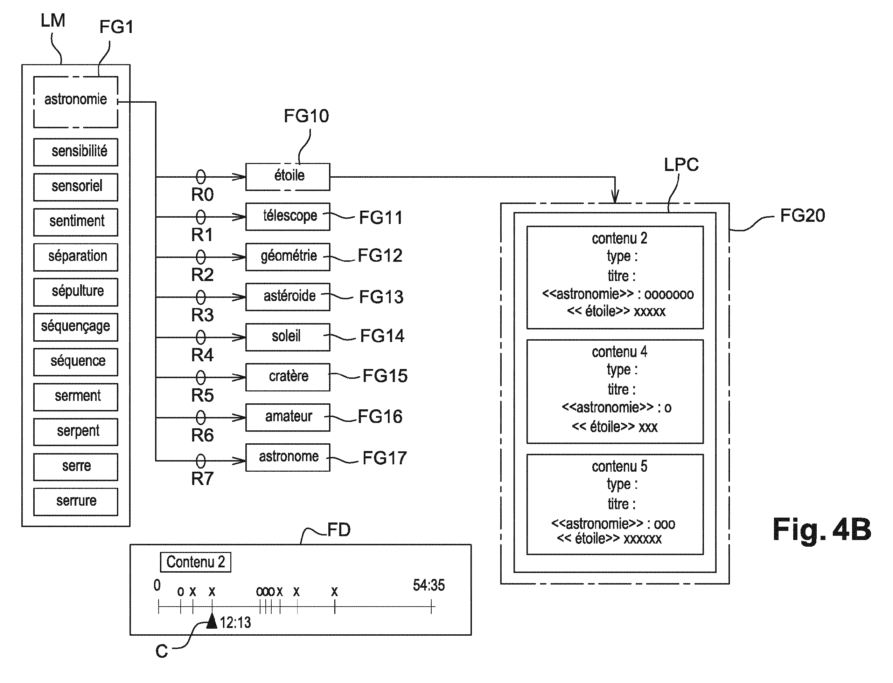

On va maintenant décrire, en relation avec la **figure 4B,** un mode de réalisation d'une interface graphique du terminal TER de la **figure 2** qui permet d'accéder à une pluralité de contenus selon le procédé d'accès qui vient d'être décrit en liaison avec la **figure 3B.**

Le mot-clé sélectionné par l'utilisateur UT au cours de l'étape E10 précitée est par exemple encore le mot « astronomie ». Dans l'exemple représenté sur la **figure 4B,** le mot « astronomie » est sélectionné à partir d'une liste de mots LM proposée à l'utilisateur et apparaît dans une fenêtre graphique FG1 représentée en traits mixtes.

En association avec la fenêtre graphique FG1 est affichée lors de l'étape E14 précitée au moins une autre fenêtre graphique FG10 qui identifie au moins un mot-clé prédéterminé associé préalablement au mot-clé « astronomie » identifié dans la fenêtre graphique FG1.

Dans l'exemple représenté sur la **figure 4B,** huit autres fenêtres graphiques FG10 à FG17 identifiant chacune un mot-clé prédéterminé associé préalablement au mot-clé sélectionné « astronomie » sont affichées sur l'écran EC du terminal TER. Il s'agit par exemple des mots « étoile », « télescope », « géométrie », « astéroïde », « soleil », « cratère », « amateur », « astronome ».

A l'étape E16 précitée, l'utilisateur UT interagit avec une des fenêtres graphiques FG10 à FG17, par exemple la fenêtre graphique FG10. A cet effet, cette fenêtre est représentée en traits mixtes sur la **figure 4B.**

Suite à cette interaction, est fournie une liste LCP de contenus, dans chacun desquels figurent à la fois le mot-clé « astronomie » et le mot-clé prédéterminé « étoile ». Une telle liste LCP est en fait une sous-liste de la liste LC représentée sur la **figure 4A.** Dans l'exemple représenté sur la **figure 4B,** la sous-liste LCP contient par exemple les trois contenus « contenu 2 », « contenu 4 » et « contenu 5 » de la liste LC.

Pour un contenu donné de la sous-liste LCP, le degré de significativité du mot « astronomie » par rapport au degré de significativité du mot « étoile » est prédéterminé dans la base de connaissances BC.

Dans l'exemple représenté sur la **figure 4B,** le degré de significativité du mot « astronomie » est égal au degré de significativité du mot « étoile ».

De façon plus générale, à partir de la liste de contenus LC, la base de connaissance BC de la **figure 1** établit une sous-liste LPC de contenus $C_1$, $C_2$,..., $C_i$,..., $C_K$ ($1 \leq i \leq K$) qui contiennent respectivement tous au moins une instance d'un mot MS sélectionné par l'utilisateur et au moins une instance d'un mot prédéterminé MP ayant été préalablement associé au mot sélectionné MS.

Les contenus de la sous-liste LPC sont triés respectivement selon un score SC qui, pour chaque contenu $C_i$, est calculé selon la formule suivante :

$$SC(C_i) = [\lambda \times \alpha_S(MS, C_i)] + [(1 - \lambda) \times \alpha_S(MP, C_i)]$$

où :

- $\alpha_S(MS, C_i)$ représente le degré de significativité, dans le contenu $C_i$, du mot sélectionné MS,
- $\alpha_S(MP, C_i)$] représente le degré de significativité, dans le contenu $C_i$, du mot prédéterminé MP,
- $\lambda$ est un coefficient de pondération tel que 0<λ<1 qui détermine, dans le contenu $C_i$, la proportion de significativité du mot sélectionné MS par rapport à la significativité du mot prédéterminé MP.

Ainsi, dans l'exemple représenté sur la **figure 4B,** le coefficient de pondération λ est préétabli par la base de connaissance BC pour être égal à 0,5, de telle façon que, pour chaque contenu « contenu 2 », « contenu 4 » et « contenu 5 » de la sous-liste LCP, le mot sélectionné « astronomie » soit aussi significatif que le mot prédéterminé « étoile ».

Selon une variante de réalisation représentée sur la **figure 4B,** au lieu d'interagir directement avec la fenêtre graphique identifiant un mot-clé prédéterminé, l'utilisateur a la possibilité d'interagir avec un repère positionné au milieu d'un lien reliant chaque fenêtre graphique FG10 à FG17 à la fenêtre graphique FG1 identifiant le mot-clé « astronomie » sélectionné.

Dans l'exemple représenté, chaque repère, désigné par les références R0 à R7, est fixe et est positionné au milieu du lien de façon à indiquer à l'utilisateur que le degré de significativité du mot « astronomie » est égal au degré de significativité du mot « étoile ».

Dans l'exemple représenté sur la **figure 4B,** et de façon similaire à la **figure 4A,** la sous-liste LCP de contenus est fournie visuellement à l'utilisateur au cours de l'étape E20 précitée, dans une fenêtre graphique FG20 représentée en traits mixtes.

Pour chaque contenu de la sous-liste LCP, une occurrence du mot « astronomie » est indiquée par le symbole « o » et une occurrence du mot étoile est indiquée par le symbole « x ».

Lorsqu'un contenu est sélectionné par l'utilisateur UT dans la sous-liste LCP, par exemple le contenu 2, la rubrique relative au contenu 2 apparaît par exemple en surbrillance ou de façon agrandie par rapport aux rubriques relatives aux autres contenus de la sous-liste LCP.

Dans le cas où le contenu 2 est de type audio, les occurrences du mot « astronomie » et du mot « étoile » sont indiquées sur une fenêtre graphique dédiée FD représentée en traits mixtes sur la **figure 4B,** par les symboles « o » et « x » qui se succèdent sur un axe chronologique horizontal affiché dans la fenêtre FD et représentant la durée du contenu 2, soit 54 minutes et 35 secondes dans l'exemple représenté.

L'utilisateur UT a alors accès directement aux portions du contenu 2 qui contiennent soit le mot « astronomie » en sélectionnant un des symboles « o », soit le mot « étoile » en sélectionnant un des symboles « x ». Une telle sélection est effectuée soit à l'aide d'un curseur, soit de façon tactile. Sur la **figure 4B,** un curseur C indique la position courante de restitution de la portion du contenu 2 qui contient la deuxième occurrence du mot « étoile », soit 12mns et 13 secondes dans l'exemple représenté.

Selon une variante non représentée sur la **figure 4B,** un autre type d'interaction avec l'une des fenêtres graphiques FG10 à FG17 est proposé. Une telle interaction consiste par exemple en un double appui sur l'une desdites fenêtres, par exemple la fenêtre FG11 identifiant le mot prédéterminé « télescope ». Cette interaction est alors détectée au moyen du module DET de détection d'interactions qui est contenu dans le dispositif d'accès 100 de la **figure 2.**

La détection précitée déclenche l'envoi auprès de la plateforme de service PFS de la **figure 1,** via le module de communication UC du terminal TER, d'une requête en fourniture de contenus qui contient ledit mot-clé prédéterminé sélectionné.

A réception de cette requête, la plateforme PFS dialogue avec la base de connaissance BC représentée sur la **figure 1,** en vue de déterminer une pluralité de contenus préalablement indexés comme décrit plus haut dans la description, et dans chacun desquels figurent de façon significative ledit mot-clé prédéterminé sélectionné. Au cours de cette étape, le mot-clé prédéterminé sélectionné est interprété par la base de connaissance BC comme s'il s'agit d'un mot-clé sélectionné par l'utilisateur UT au début de sa recherche, au même titre que le mot-clé « astronomie » précité. Egalement au cours de cette étape, la base de connaissance BC détermine également un ou plusieurs autres mots-clés, ledit ou lesdits autre(s) mot(s)-clé(s) étant un ou des mot(s)-clé(s) prédéterminé(s) ayant été associé(s) préalablement par cette dernière audit mot-clé sélectionné « télescope », à l'aide de la mesure d'association précitée.

La plateforme PFS renvoie au terminal TER, via le réseau de communication RC, une liste des contenus déterminés par la base de connaissance BC, ainsi que ledit ou lesdits mot(s) prédéterminé(s).

Il est ensuite procédé, à l'aide du module MGI de génération d'interface de la **figure 2 :**

- à l'affichage, dans la fenêtre graphique FG1 de la **figure 4B,** du mot-clé « télescope » en lieu et place du mot-clé « astronomie » sélectionné précédemment,
- et à l'affichage, dans les autres fenêtres graphiques FG10 à FG17, des mots-clés prédéterminés qui ont été établis par la base de connaissance BC, par exemple « astrophysique », « astrophysicien », « années-lumière », « déformation », « astronome », « galaxie », « comète », « étoile », respectivement en lieu et place des mots-clés prédéterminés affichés précédemment.

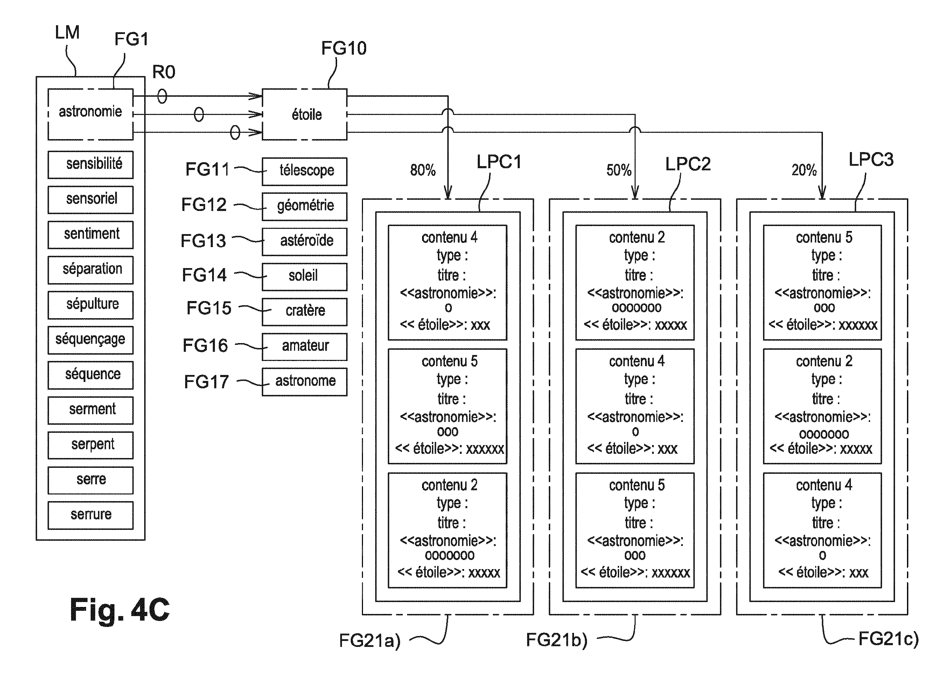

On va maintenant décrire, en référence à la **figure 4C,** une variante de l'interface représentée à la **figure 4B.**

Dans l'exemple représenté, chaque repère R0 à R7 est apte à se déplacer le long de son lien respectif, soit en direction de la fenêtre graphique FG1, soit en direction de celle des fenêtres graphiques FG10 à FG17 qui a été sélectionnée par l'utilisateur UT. Sur la **figure 4C,** seul le repère R0 est représenté dans un souci de simplification et de clarté de la **figure 4C.** Le déplacement de chaque repère R0 à R7 engendre avantageusement la modification de l'ordonnancement des contenus de la sous-liste de contenus LCP, en fonction de la position de déplacement du curseur sur ledit lien.

Selon un premier exemple, si l'utilisateur souhaite obtenir, à partir de la liste de contenus LC obtenue après sélection du mot-clé « astronomie », une liste partielle LCP1 de contenus pour lesquels le degré de significativité du mot-clé « astronomie » est plus élevé, par exemple de 80%, que le degré de significativité du mot-clé prédéterminé « étoile », l'utilisateur déplace le repère R0 sur le lien de façon à le positionner à proximité de la fenêtre graphique FG1. Selon un deuxième exemple, si l'utilisateur souhaite obtenir, à partir de la liste de contenus LC obtenue après sélection du mot-clé « astronomie », une liste partielle LCP2 de contenus pour lesquels le degré de significativité du mot-clé « astronomie » est identique au degré de significativité du mot-clé prédéterminé « étoile », l'utilisateur déplace le repère R0 sur le lien de façon à le positionner à mi-chemin entre la fenêtre graphique FG1 et la fenêtre graphique FG10. Selon un troisième exemple, si l'utilisateur souhaite obtenir, à partir de la liste de contenus LC obtenue après sélection du mot-clé « astronomie », une liste partielle LCP3 de contenus pour lesquels le degré de significativité du mot-clé « astronomie » est moins élevé, par exemple de 20%, que le mot-clé prédéterminé « étoile », l'utilisateur déplace le repère R0 sur le lien de façon à le positionner à proximité de la fenêtre graphique FG10. Selon l'invention, les contenus des listes partielles LCP1, LCP2 et LCP3 sont identiques. Seul, leur ordonnancement dans chacune de ces listes partielles varie.

Une telle modification du repère R0 est rendue possible en faisant varier le coefficient de pondération $\lambda$ précité.

Ainsi, selon la formule mentionnée plus haut :

- plus un repère, R0 par exemple, est positionné vers le mot sélectionné MS, plus le coefficient de pondération $\lambda$ est proche de 1 et donc plus le mot sélectionné MS a de l'influence dans l'ordonnancement de la sous-liste LCP,
- plus un repère, R0 par exemple, est positionné vers le mot prédéterminé MP, plus le coefficient de pondération $\lambda$ est proche de 0 et donc plus le mot prédéterminé MP a de l'influence dans l'ordonnancement de la sous-liste LCP.

A cet effet, comme dans l'exemple de la **figure 4C,** le coefficient de pondération $\lambda$ peut par exemple prendre une valeur continue entre 0,1 et 0,9 en fonction de la position du repère sur le lien.

Selon un autre exemple, le lien pourrait présenter des graduations entre les valeurs 0 et 1, telles que par exemple les graduations 0,1 ; 0,2 ; 0,3 .... ; 0,9.

L'invention qui vient d'être décrite ci-dessus est particulièrement bien adaptée pour proposer l'accès, aussi bien en situation de sédentarité que de mobilité, à des contenus audio tels que les podcasts, dont les collections ne sont, à ce jour, jamais exploitées en mode transversal «inter-contenus».

L'interface selon l'invention pourrait être ainsi proposée dans les véhicules, en tant qu'interface d'autoradio. Au lieu d'écouter des contenus audio en sélectionnant des fréquences préenregistrées correspondant respectivement à des stations de radio ou bien d'écouter des contenus audio en sélectionnant les podcasts proposés par ces radios, l'utilisateur UT a la possibilité, grâce à l'interface proposée, d'accéder aux contenus radiophoniques de manière sémantique, c'est à dire à partir d'un mot ou d'une expression qui est sélectionné(e) au préalable et qui soit représentatif de ces contenus radiophoniques.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

**Revendications**

**1.** Procédé d'accès à une pluralité de contenus à partir d'au moins un mot, ledit procédé étant **caractérisé en ce qu'**il comprend les étapes suivantes :

- afficher une fenêtre graphique (FG1) contenant une liste prédéterminée de mots,
- recevoir (E1) une instruction de sélection d'un mot appartenant à ladite liste,
- fournir (E6) de façon sonore ou visuelle un ensemble de contenus dans chacun desquels figure de façon significative ledit mot sélectionné,
- pour un contenu choisi dans ledit ensemble, accéder (E7) directement à au moins une portion du contenu choisi qui contient ledit mot sélectionné.

2. Procédé d'accès à une pluralité de contenus selon la revendication 1, comprenant en outre les étapes suivantes :

- afficher (E14), en complément de ladite fenêtre graphique contenant la liste prédéterminée de mots, au moins une autre fenêtre graphique contenant un mot prédéterminé qui a été associé préalablement audit mot sélectionné,
- interagir (E16) avec ladite autre fenêtre graphique affichée,
- en réponse à ladite interaction, fournir (E20) de façon sonore ou visuelle un sous-ensemble des contenus dudit ensemble fourni, chaque contenu comprenant à la fois ledit mot sélectionné et ledit mot prédéterminé,
- pour un contenu choisi dans ledit sous-ensemble, accéder (E21) directement à au moins une portion du contenu choisi qui contient soit ledit mot sélectionné, soit ledit mot prédéterminé, soit les deux mots.

3. Procédé d'accès à une pluralité de contenus selon la revendication 1 ou 2, comprenant, pour un contenu choisi dans ledit ensemble ou dans ledit sous-ensemble de contenus :

- une indication du nombre d'occurrences, dans ledit contenu choisi, du mot sélectionné et/ou du mot prédéterminé, ainsi qu'une indication de la position de chaque occurrence dans ledit contenu choisi,
- une réception d'une instruction de sélection d'au moins une occurrence.

4. Procédé d'accès à une pluralité de contenus selon l'une quelconque des revendications 1 à 3, dans lequel lesdites fenêtres graphiques étant rattachées entre elles par un lien, ladite étape d'interaction consiste à appuyer sur un repère fixe positionné sur ledit lien, chaque contenu dudit sous-ensemble de contenus fourni comprenant, selon un degré de significativité respectif prédéterminé, ledit mot sélectionné et ledit mot prédéterminé.

5. Procédé d'accès à une pluralité de contenus selon l'une quelconque des revendications 1 à 3, dans lequel lesdites fenêtres graphiques étant rattachées entre elles par un lien, ladite étape d'interaction consiste à se déplacer sur ledit lien en direction de la fenêtre graphique ou en direction de l'autre fenêtre graphique, l'ordonnancement des contenus dudit sous-ensemble de contenus fourni étant modifié en fonction de la position de déplacement sur ledit lien.

6. Dispositif (100) d'accès à une pluralité de contenus à partir d'au moins un mot, ledit dispositif étant **caractérisé en ce qu'**il comprend :

- des moyens (MGI) pour afficher une fenêtre graphique (FG1) contenant une liste prédéterminée de mots,
- des moyens (INT) pour recevoir une instruction de sélection d'un mot appartenant à ladite liste,
- des moyens (EC ou HP) pour fournir de façon sonore ou visuelle un ensemble de contenus dans chacun desquels figure de façon significative ledit mot sélectionné,
- pour un contenu choisi dans ledit ensemble, des moyens (FD) pour accéder directement à au moins une portion du contenu choisi qui contient ledit mot sélectionné.

7. Dispositif d'accès à une pluralité de contenus selon la revendication 6, comprenant en outre :

- des moyens (MGI) pour afficher, en complément de ladite fenêtre graphique affichée contenant la liste prédéterminée de mots, au moins une autre fenêtre graphique contenant un mot prédéterminé qui a été associé préalablement audit mot sélectionné,
- des moyens (EC ou HP) pour, en réponse à une interaction avec ladite autre fenêtre graphique, fournir de façon sonore ou visuelle un sous-ensemble des contenus dudit ensemble fourni, chaque contenu comprenant à la fois ledit mot sélectionné et ledit mot prédéterminé,
- pour un contenu choisi dans ledit sous-ensemble, des moyens (FD) pour accéder directement à au moins une portion du contenu choisi qui contient soit ledit mot sélectionné, soit ledit mot prédéterminé, soit les deux mots.

**8.** Dispositif d'accès selon la revendication 6 ou 7, comprenant, pour un contenu choisi dans ledit ensemble ou dans ledit sous-ensemble de contenus :

- des moyens (MGI) pour indiquer le nombre d'occurrences, dans ledit contenu choisi, du mot sélectionné et/ou du mot prédéterminé, ainsi que pour indiquer la position de chaque occurrence dans ledit contenu choisi,
- des moyens (INT) pour recevoir une instruction de sélection d'au moins une occurrence.

**9.** Terminal (TER) apte à contenir un dispositif (100) d'accès selon l'une quelconque des revendications 6 à 8.

**10.** Programme d'ordinateur comportant des instructions de code de programme pour l'exécution des étapes du procédé d'accès selon l'une quelconque des revendications 1 à 5, lorsque ledit programme est exécuté sur un ordinateur.

**11.** Support d'enregistrement lisible par un ordinateur sur lequel est enregistré un programme d'ordinateur comprenant des instructions de code de programme pour l'exécution des étapes du procédé d'accès selon l'une quelconque des revendications 1 à 5, lorsque ledit programme est exécuté par un ordinateur.

PFS

| TV | VOD | IMAGES VIDEOS PHOTOS | MUSIQUE | LIVRES | APPLIS SERVICES |

PODCASTS

BC

RC

TER

STB

UT

TLV

**Fig. 1**

**Fig. 2**

SELECTION AU MOINS UN MOT-CLE — E1

ENVOI REQUÊTE CONTENANT
LE MOT-CLE SELECTIONNE — E2

DETERMINATION LISTE DE CONTENUS DANS CHACUN
DESQUELS FIGURE DE FAÇON SIGNIFICATIVE
LE MOT-CLE SELECTIONNE — E3

TRANSMISSION LISTE DE CONTENUS DANS CHACUN
DESQUELS FIGURE DE FAÇON SIGNIFICATIVE
LE MOT-CLE SELECTIONNE — E4

AFFICHAGE FENÊTRE GRAPHIQUE CONTENANT
LE MOT-CLE SELECTIONNE — E5

FOURNITURE LISTE DE CONTENUS DANS CHACUN
DESQUELS FIGURE DE FAÇON SIGNIFICATIVE
LE MOT-CLE SELECTIONNE — E6

ACCES DIRECT A AU MOINS UNE PORTION D'UN
CONTENU CONTENANT LE MOT-CLE SELECTIONNE — E7

# Fig. 3A

E10 — SELECTION AU MOINS UN MOT-CLE

E11 — ENVOIE REQUÊTE CONTENANT LE MOT-CLE SELECTIONNE

E12 — DETERMINATION AU MOINS UN MOT-CLE PREDETERMINE AYANT ÉTÉ ASSOCIE PREALABLEMENT AU LE MOT-CLE SELECTIONNE ET LISTE DE CONTENUS DANS CHACUN DESQUELS FIGURE DE FAÇON SIGNIFICATIVE FIGURE DE FAÇON SIGNIFICATIVE LE MOT-CLE SELECTIONNE

E13 — TRANSMISSION MOT-CLE PREDETERMINE ET LISTE DE CONTENUS DANS CHACUN DESQUELS FIGURE DE FAÇON SIGNIFICATIVE LE MOT-CLE SELECTIONNE

E14 — AFFICHAGE FENÊTRE GRAPHIQUE CONTENANT LE MOT-CLE SELECTIONNE ET AUTRE FENÊTRE GRAPHIQUE CONTENANT LE MOT-CLE PREDETERMINE

E15 — FOURNITURE LISTE DE CONTENUS DANS CHACUN DESQUELS FIGURE DE FAÇON SIGNIFICATIVE LE MOT-CLE SELECTIONNE

E16 — INTERACTION AVEC AUTRE FENÊTRE GRAPHIQUE

E17 — ENVOI REQUÊTE CONTENANT LE MOT-CLE SELECTIONNE ET LE MOT-CLE PREDETERMINE

E18 — DETERMINATION LISTE DE CONTENUS DANS CHACUN DESQUELS FIGURENT DE FAÇON SIGNIFICATIVE LE MOT-CLE SELECTIONNE ET LE MOT-CLE PREDETERMINE

E19 — TRANSMISSION LISTE DE CONTENUS DANS CHACUN DESQUELS FIGURENT DE FAÇON SIGNIFICATIVE LE MOT-CLE SELECTIONNE ET LE MOT-CLE PREDETERMINE

E20 — FOURNITURE LISTE DE CONTENUS DANS CHACUN DESQUELS FIGURENT DE FAÇON SIGNIFICATIVE LE MOT-CLE SELECTIONNE ET LE MOT-CLE PREDETERMINE

E21 — ACCES DIRECT A AU MOINS UNE PORTION D'UN CONTENU CHOISI DANS LA LISTE

## Fig. 3B

**LM**

| astronomie | — FG1 |
| sensibilité |
| sensoriel |
| sentiment |
| séparation |
| sépulture |
| séquençage |
| séquence |
| serment |
| serpent |
| serre |
| serrure |

**LC**

**FG2**

contenu 1
type :
titre :
<<astronomie>> : ooooo

contenu 2
type :
titre :
<<astronomie>> : ooooooo

contenu 3
type :
titre :
<<astronomie>> : oooo

contenu 4
type :
titre :
<<astronomie>> : o

contenu 5
type :
titre :
<<astronomie>> : ooo

contenu 6
type :
titre :
<<astronomie>> : o

**FD**

Contenu 1

0        o         ooo         o        58:05

▲ 23:58

C

**Fig. 4A**

Fig. 4B

EP 2 922 297 A1

**Fig. 4C**

EP 2 922 297 A1

Europäisches
Patentamt

European
Patent Office

Office européen
des brevets

# RAPPORT DE RECHERCHE EUROPEENNE

Numéro de la demande

EP 15 16 0156

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 7 933 338 B1 (CHOUDHRY SHAHID [GB] ET AL) 26 avril 2011 (2011-04-26)<br>* figures 7a, 9a, 10b *<br>* colonne 1, ligne 47 - colonne 2, ligne 12 *<br>* colonne 3, ligne 43 - ligne 54 *<br>* colonne 3, ligne 60 - colonne 4, ligne 46 *<br>* colonne 5, ligne 1 - colonne 6, ligne 42 *<br>* colonne 8, ligne 7 - ligne 12 *<br>* colonne 10, ligne 3 - ligne 50 *<br>* colonne 13, ligne 11 - ligne 29 *<br>* colonne 14, ligne 14 - ligne 16 *<br>* colonne 15, ligne 27 - colonne 17, ligne 4 *<br>----- | 1-11 | INV.<br>H04N21/233<br>G06F17/30<br>H04N21/2343<br>H04N21/422<br>H04N21/439<br>H04N21/482 |
| A | US 6 094 648 A (AALBERSBERG IJSBRAND JAN [US]) 25 juillet 2000 (2000-07-25)<br>* figure 3 *<br>* colonne 1, ligne 38 - ligne 39 *<br>* colonne 3, ligne 41 - ligne 44 *<br>* colonne 4, ligne 66 - colonne 5, ligne 56 *<br>----- | 1-11 | DOMAINES TECHNIQUES RECHERCHES (IPC)<br>H04N<br>G06F |
| A | US 7 263 484 B1 (CARDILLO PETER S [US] ET AL) 28 août 2007 (2007-08-28)<br>* colonne 1, ligne 28 - ligne 30 *<br>* colonne 3, ligne 15 - ligne 43 *<br>* colonne 7, ligne 12 - ligne 55 *<br>----- | 1-11 | |
| A | US 7 966 632 B1 (PAN YU [US] ET AL) 21 juin 2011 (2011-06-21)<br>* colonne 1, ligne 26 - ligne 38 *<br>* colonne 1, ligne 55 - ligne 61 *<br>* colonne 3, ligne 39 - ligne 42 *<br>* colonne 4, ligne 42 - ligne 48 *<br>----- | 1-11 | |

Le présent rapport a été établi pour toutes les revendications

| Lieu de la recherche | Date d'achèvement de la recherche | Examinateur |
|---|---|---|
| La Haye | 4 août 2015 | Boubal, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 0156

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-08-2015

| Document brevet cité au rapport de recherche | | Date de publication | Membre(s) de la famille de brevet(s) | | Date de publication |
|---|---|---|---|---|---|
| US 7933338 | B1 | 26-04-2011 | US | 7933338 B1 | 26-04-2011 |
| | | | US | 8185543 B1 | 22-05-2012 |
| | | | US | 8189685 B1 | 29-05-2012 |
| US 6094648 | A | 25-07-2000 | DE | 69615459 D1 | 31-10-2001 |
| | | | DE | 69615459 T2 | 23-05-2002 |
| | | | EP | 0749603 A1 | 27-12-1996 |
| | | | JP | H09510811 A | 28-10-1997 |
| | | | JP | 2004005742 A | 08-01-2004 |
| | | | JP | 2005339556 A | 08-12-2005 |
| | | | KR | 100432070 B1 | 06-10-2004 |
| | | | US | 5946678 A | 31-08-1999 |
| | | | US | 6094648 A | 25-07-2000 |
| | | | WO | 9621901 A2 | 18-07-1996 |
| US 7263484 | B1 | 28-08-2007 | US | 7263484 B1 | 28-08-2007 |
| | | | US | 7313521 B1 | 25-12-2007 |
| | | | US | 7324939 B1 | 29-01-2008 |
| | | | US | 7406415 B1 | 29-07-2008 |
| | | | US | 7475065 B1 | 06-01-2009 |
| | | | US | 2009083033 A1 | 26-03-2009 |
| US 7966632 | B1 | 21-06-2011 | US | 7966632 B1 | 21-06-2011 |
| | | | US | 8959553 B1 | 17-02-2015 |

EPO FORM P0460

Pour tout renseignement concernant cette annexe : voir Journal Officiel de l'Office européen des brevets, No.12/82